# EUROPÄISCHE PATENTSCHRIFT

(11) **EP 2 899 103 B1**
(45) Veröffentlichungstag und Bekanntmachung des Hinweises auf die Patenterteilung: **28.11.2018**
(21) Anmeldenummer: 14198504.4
(22) Anmeldetag: 17.12.2014
(51) Int. Cl.: B62D 61/00, B62D 61/06

(54) **Verfahren zum Umrüsten von vierrädrigen Fahrzeugen**
Method for converting four-wheeled vehicles
Procédé de rééquipement de véhicules à quatre roues

(30) Priorität: 28.01.2014 DE 102014100937
(43) Veröffentlichungstag der Anmeldung: 29.07.2015
(73) Patentinhaber: Ellenrieder, Wenzeslaus, 87679 Dösingen (DE)
(72) Erfinder: Ellenrieder, Wenzeslaus, 87679 Dösingen (DE)
(74) Vertreter: Hutzelmann, Gerhard

(56) Entgegenhaltungen:
- WO-A1-2006/074923
- US-A- 5 417 300
- US-A1- 2008 087 483
- US-A1- 2010 201 092

## Beschreibung

Die Erfindung bezieht sich auf ein Verfahren zum Umrüsten von herkömmlichen, vierrädrigen Fahrzeugen auf dreirädrige Fahrzeuge im Sinne der Fahrzeugszulassungsverordnung.

Ein ähnliches Fahrzeug ist zum Beispiel von US20080087483 bekannt.

Es sind verschiedene Fahrzeuge auf dem Markt, die mit den EU-Führerscheinklassen A1 und AM bewegt werden dürfen.

Bei vierrädrigen Fahrzeugen gemäß Führerscheinklasse AM besteht dabei jedoch das Problem, daß diese eine maximale Leermasse von 350kg besitzen dürfen.

Aufgrund dieser geringen Leermasse sind derartige Fahrzeuge gerade bei Unfällen vergleichsweise unsicher.

Die Einschränkung hinsichtlich maximaler Leermasse gilt nicht für dreirädrige Fahrzeuge.

Aufgabe der Erfindung ist es daher, eine Möglichkeit zu schaffen, deutlich sicherere Fahrzeuge zu schaffen, die mit Führerscheinklasse A1, welche die Führerscheinklasse AM einschließt, bewegt werden dürfen.

Diese Aufgabe wird erfindungsgemäß dadurch gelöst, daß die Hinterachse und ein eventueller Hinterachsträger ausgebaut wird, die Radkästen verbreitert oder neue Radabdeckungen geschaffen werden und stattdessen eine Hinterachse mit einem Rad oder mit zwei in geringem Abstand zueinander angeordneten Rädern, die zulassungsrechtlich als ein Rad gelten, eingebaut wird.

Damit wird auf Basis eines ursprünglich vierrädrigen Fahrzeuges ein dreirädriges Fahrzeug geschaffen, welches, eine entsprechende Drosselung des Motors auf die erlaubten maximal 15kW Leistung vorausgesetzt, auch mit Führerscheinklasse AM gefahren werden darf. Entweder wird beispielsweise durch Entfernen der ursprünglichen Kofferraumwanne und Einsätzen neuer Radabdeckungen oder aber durch Verbreitereung der bestehenden Radabdeckungen nach innen Platz für die neuen Hinterräder geschaffen.

Dabei hat es sich als sehr vorteilhaft erwiesen, wenn ein Hinterachsträger eingesetzt wird, der an die Aufnahmepunkte der ursprünglichen Hinterachse befestigt wird.

Hierdurch kann der Umbau vergleichsweise einfach durchgeführt werden.

Ebenfalls sehr vorteilhaft ist es erfindungsgemäß, wenn Versteifungsträger zur Stabilisierung der Fahrzeugkarosserie vorgesehen werden.

Damit wird ein Verwinden des Fahrzeuges durch die Änderungen im Bereich des Unterbodens und der Radkästen zum Umbau der Hinterachse verhindert.

Eine weitere, erfindungsgemäß sehr vorteilhafte Ausgestaltung der Erfindung liegt vor, wenn zwei Räder mit einer starren Antriebswelle verbunden sind.

Durch den geringen Abstand der beiden Räder kann oftmals auf einen Ausgleich der Raddrehzahlen verzichtet werden. Trotzdem kann der Antrieb über diese beiden Räder erfolgen.

Sehr vorteilhaft ist es erfindungsgemäß aber auch, wenn zwischen den beiden Rädern ein Ausgleichsgetriebe vorgesehen wird.

Hierdurch werden bei Kurvenfahrten auftretende Drehzahlunterschiede zwischen den Rädern ausgeglichen. Es wird so ein sehr ausgewogenes Fahrverhalten erreicht.

Eine ebenfalls sehr vorteilhafte Fortbildung der Erfindung liegt auch vor, wenn die beiden Räder getrennt voneinander und nicht miteinander gekoppelt gelagert werden.

Dies bietet sich vor allem bei nicht angetriebenen Rädern an. Es ist aber auch denkbar, daß nur eines der beiden Räder angetrieben wird. In diesem Zusammenhang ist es auch denkbar, daß nur ein Rad vorgesehen wird, welches wenigstens annähernd mittig angeordnet ist und ebenfalls angetrieben ausgeführt sein kann.

Sehr vorteilhaft ist es erfindungsgemäß auch, wenn eine Schwinge, ein Lenker oder dergleichen vorgesehen ist, an dem das Rad bzw. die Räder gelagert sind.

Dabei hat es sich als sehr vorteilhaft erwiesen, wenn die Schwinge bzw. der Lenker über eine oder mehrere Federn und einen oder mehrere Stoßdämpfer mit der Karosserie gekoppelt ist.

Hierdurch wird ein sehr gutes Federungs- und Dämpfungsverhalten erzielt.

Sehr vorteilhaft ist es erfindungsgemäß auch, wenn die Umbauteile fahrzeugtypspezifisch gefertigt werden und zusammen einen Umbausatz bilden. Damit kann eine sehr einfache und schnelle Umrüstung bestehender Fahrzeuge erreicht werden. Ein solcher Umbausatz kann neben der Fahrwerksumrüstung auch Umrüstteile zur Drosselung des Motors beinhalten.

Im folgenden wird die Erfindung anhand eines Ausführungsbeispiels veranschaulicht.

Dabei zeigen:
- Fig. 1: eine Darstellung eines Fahrzeuges mit entfernter Hinterachse

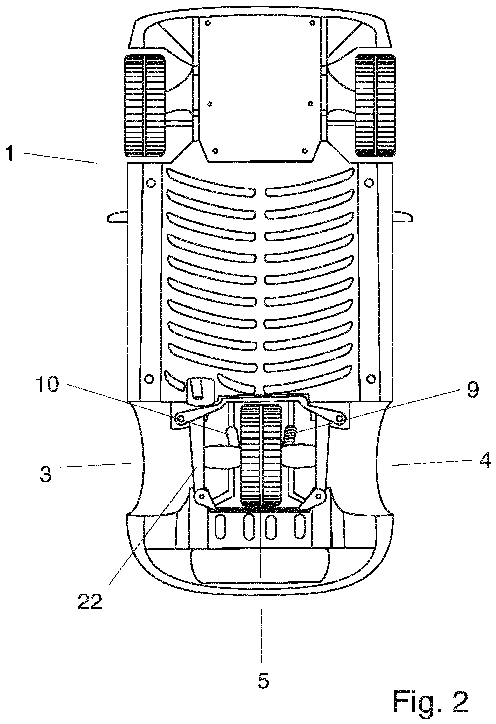

- Fig. 2: eine Darstellung des Fahrzeuges, nachdem ein Hinterrad eingesetzt ist,

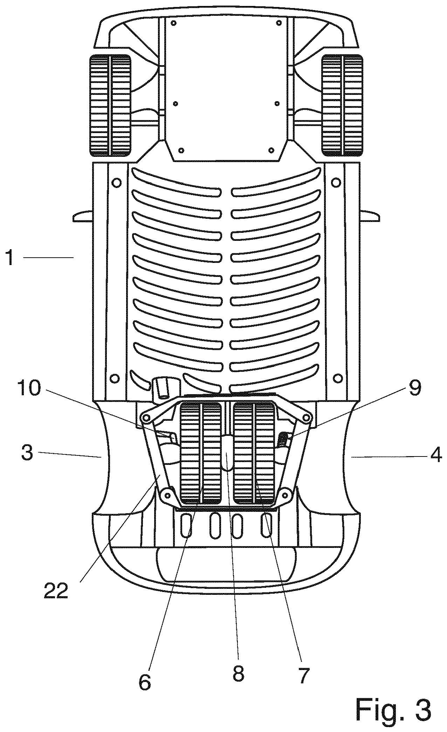

- Fig. 3: eine Darstellung eines weiteren Fahrzeuges, bei dem zwei eng beisammen stehende Hinterräder angeordnet sind.

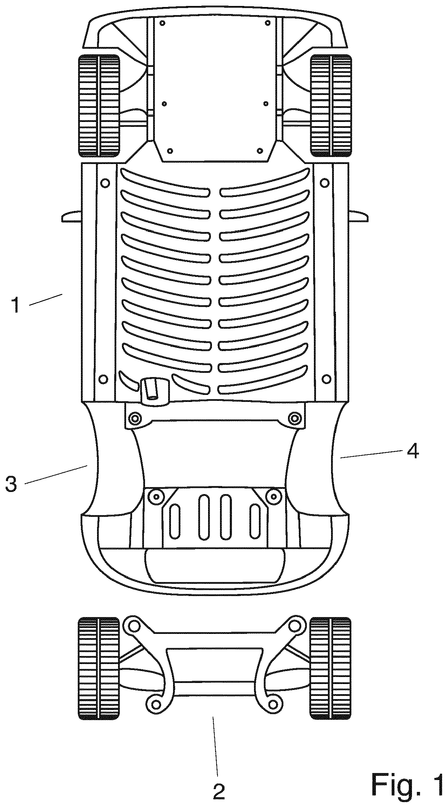

Mit 1 ist in Fig. 1 ein Kraftfahrzeug bezeichnet, das ein PKW ist. PKW sind ab Werk als vierrädrige Fahrzeuge ausgestaltet.

Der Gesetzgeber hat die Möglichkeit geschaffen, daß mit der EU-Führerscheinklasse AM vierrädrige Leichtkraftfahrzeuge bis zu einer Leermasse von 350kg bewegt werden dürfen. Daneben gibt es die Führerscheinklasse A1, die hauptsächlich für Krafträder bis zu einem Hubraum von 125cm³ vorgesehen ist, aber auch gestattet, dreirädrige Fahrzeuge zu führen und auch die Führerscheinklasse AM einschließt.

Diese Führerscheinklassen sind vor allem für Jugendliche ab 16 Jahren interessant.

Bei vierrädrigen Fahrzeugen besteht dabei jedoch das Problem, daß diese aufgrund der geringen maximalen Leermasse von 350kg im extremen Leichtbau gefertigt sein müssen.

Deswegen sind derartige Fahrzeuge gerade bei Unfällen vergleichsweise unsicher.

Die Einschränkung hinsichtlich maximaler Leermasse gilt nicht für dreirädrige Fahrzeuge.

In der Führerscheinklasse A1 ist entgegen den Regelungen in der Klasse AM auch keine Hubraumbeschränkung vorgesehen, sondern nur eine maximale Leistung von 15kW vorgegeben.

Mit der vorliegenden Erfindung wird daher ein gegenüber den Leichtfahrzeugen entsprechend der Führerscheinklasse AM deutlich sichereres Fahrzeug geschaffen, welches aber dennoch mit der Führerscheinklasse A1 von Jugendlichen ab 16 Jahren gefahren werden darf.

Hierzu wird aus dem Fahrzeug 1 die Hinterachse 2 komplett herausgenommen und die Radkästen 3 und 4 nach innen zur Fahrzeugmitte hin verbreitert.

Anstatt der alten Hinterachse 2 wird eine neue Hinterachskonstruktion 22 eingesetzt, bei der ein zentrales Rad 5 vorgesehen ist. Diese Rad 5 kann entweder mitlaufend, also nicht angetrieben, oder aber auch angetrieben ausgebildet werden.

Wenn das Fahrzeug mit Frontantrieb ausgestattet ist, besteht keine Notwendigkeit, das Rad 5 angetrieben auszuführen.

Es besteht aber auch die Möglichkeit, zwei Räder 6 und 7 in geringem Abstand voneinander anzuordnen, die zulassungsrechtlich als ein einziges Rad gelten.

Gerade wenn das Rad 5 angetrieben ausgebildet werden soll, bietet sich aufgrund höherer Traktion und damit besserer Fahrstabilität die Ausführung mit zwei Rädern 6 und 7 an.

Diese Räder 6 und 7 können dabei vom Antrieb her starr miteinander verbunden sein. Ebenso ist es denkbar, daß diese beiden Räder 6 und 7 miteinander mittels einer Starrachse verbunden sind.

Es ist aber auch möglich, daß zwischen den beiden Rädern 6 und 7 ein Ausgleichsgetriebe bzw. Differential 8 vorgesehen ist, welches unterschiedliche Raddrehzahlen beim Kurvenfahren auszugleichen vermag. Allerdings ist dies aufgrund des geringen Abstandes und den dabei auftretenden äußerst geringen Drehzahlunterschieden oftmals nicht notwendig.

Das Rad 5, aber auch die Räder 6 und 7 können zusammen federnd mit dem neuen Achskörper der Hinterachskonstruktion 22 verbunden sein. Hierzu werden Federn 9 und Stoßdämpfer 10 vorgesehen, so daß ein dem ursprünglichen Fahrzeug entsprechendes Fahrverhalten erzielt wird.

Für den Umbau kann die Hinterachskonstruktion 22 mit den ursprünglichen Aufnahmepunkten der Hinterachse 2 verbunden werden.

Die Hinterachskonstruktion 22 stabilisiert und versteift dabei das Fahrzeug 1. Zusätzliche Träger und Versteifungen können vorgesehen sein, die in das Fahrzeug eingeschweisst oder eingeschraubt werden.

Die Hinterachskonstruktion 22 wird dabei fahrzeugtypspezifisch vorbereitet, so daß der Umbau in kurzer Zeit vorgenommen werden kann.

Die Radkastenverbreiterungen können auch mit vorgefertigten, einfach einsetzbaren Formteilen hergestellt werden.

Der Umbau bzw. die mit dem erfindungsgemäßen Verfahren geschaffenen Umbausätze bieten sich vor allem für Kleinwagen an, da diese auch mit einer gedrosselten Leistung von maximal 15kW noch ansprechend zu bewegen sind.

Für die Komplettierung des Umbaus sorgt eine Drosselung der Motorleistung. Diese kann im einfachsten Fall mit einer Blende im Ansaugtrakt vorgenommen werden. Es sind aber auch Eingriffe in die Regulierung oder in das Motormanagement denkbar, die zu einer Leistungsreduzierung führen.

## Patentansprüche

1. Verfahren zum Umrüsten von herkömmlichen, vierrädrigen Personen Fahrzeugen (1) (PKW) mit einer Hinterachse (2) und Radkästen (3, 4) auf dreirädrige Fahrzeuge im Sinne der Fahrzeugszulassungsverordnung, **dadurch gekennzeichnet, daß** die Hinterachse (2) und ein eventueller Hinterachsträger ausgebaut wird, die Radkästen (3, 4) zur Fahrzeugmitte hin verbreitert werden und stattdessen eine Hinterachse mit einem Rad (5) oder mit zwei in geringem Abstand zueinander angeordneten Rädern (6, 7), die zulassungsrechtlich als ein Rad gelten, eingebaut wird und daß Versteifungsträger zur Stabilisierung der Fahrzeugkarosserie vorgesehen werden.

2. Verfahren nach Anspruch 1, **dadurch gekennzeichnet, daß** ein Hinterachsträger (22) eingesetzt wird, der an die Aufnahmepunkte der ursprünglichen Hinterachse (2) befestigt wird.

3. Verfahren nach Anspruch 1 oder 2, **dadurch gekennzeichnet, daß** zwei Räder (6, 7) mit einer starren Antriebswelle verbunden sind.

4. Verfahren nach einem der vorangehenden Ansprüche, **dadurch gekennzeichnet, daß** zwischen den beiden Rädern (6, 7) ein Ausgleichsgetriebe (8) vorgesehen wird.

5. Verfahren nach einem der vorangehenden Ansprüche, **dadurch gekennzeichnet, daß** die beiden Räder (6, 7) getrennt voneinander und nicht miteinander gekoppelt gelagert werden.

6. Verfahren nach einem der vorangehenden Ansprüche, **dadurch gekennzeichnet, daß** eine Schwinge, ein Lenker oder dergleichen vorgesehen ist, an dem das Rad (5) bzw. die Räder (6, 7) gelagert sind.

7. Verfahren nach Anspruch 6, **dadurch gekennzeichnet, daß** die Schwinge bzw. der Lenker über eine oder mehrere Federn (9) und einen oder mehrere Stoßdämpfer (10) mit der Karosserie gekoppelt ist.

8. Verfahren nach einem der vorangehenden Ansprüche, **dadurch gekennzeichnet, daß** die Umbauteile fahrzeugtypspezifisch gefertigt werden und zusammen einen Umbausatz bilden.

## Claims

1. Method of converting conventional four-wheel passenger vehicles (1) with a rear axle (2) and wheel wells (3, 4) to three-wheel vehicles in the sense of vehicle licensing regulations, **characterised in that** the rear axle (2) and a possible rear axle carrier are demounted, the wheel wells (3, 4) are widened towards the vehicle centre and instead thereof a rear axle with one wheel (5) or two wheels (6, 7), which are arranged at a small spacing from one another and which in terms of licensing legality count as one wheel, is installed and that reinforcing members for stabilising the vehicle bodywork are provided.

2. Method according to claim 1, **characterised in that** use is made of a rear wheel carrier (22) which is secured to the mounting points of the original rear axle (2).

3. Method according to claim 1 or 2, **characterised in that** two wheels (6, 7) are connected with a rigid drive shaft.

4. Method according to any one of the preceding claims, **characterised in that** a differential (8) is provided between the two wheels (6, 7).

5. Method according to any one of the preceding claims, **characterised in that** the two wheels (6, 7) are mounted to be separate from one another and not coupled together.

6. Method according to any one of the preceding claims, **characterised in that** a link, a control arm or the like, at which the wheel (5) is or the wheels (6, 7) are mounted, is provided.

7. Method according to any one of the preceding claims, **characterised in that** the link or control arm is coupled to the bodywork by way of one or more springs (9) and one or more shock absorbers (10).

8. Method according to any one of the preceding claims, **characterised in that** the conversion parts are produced specifically to vehicle type and together form a conversion set.

## Revendications

1. Procédé de transformation de véhicules de tourisme (VL) classiques (1) à quatre roues, comprenant un essieu arrière (2) et des logements de roues (3, 4), en des véhicules à trois roues au sens de l'ordonnance relative à l'agrément des véhicules, **caractérisé par** la dépose de l'essieu arrière (2) et d'un éventuel support d'essieu arrière, par un élargissement des logements de roues (3, 4) en direction du centre du véhicule et par l'intégration, en substitution, d'un essieu arrière pourvu d'une roue (5) ou de deux roues (6, 7) disposées à faible distance l'une de l'autre et considérées comme une roue en matière d'agrément réglementaire ; et par le fait que des supports de rigidification sont prévus pour stabiliser la carrosserie du véhicule.

2. Procédé selon la revendication 1, **caractérisé par** l'utilisation d'un support (22) d'essieu arrière, fixé aux points de réception de l'essieu arrière (2) d'origine.

3. Procédé selon la revendication 1 ou 2, **caractérisé par le fait que** deux roues (6, 7) sont reliées à un arbre rigide d'entraînement.

4. Procédé selon l'une des revendications précédentes, **caractérisé par le fait qu'**une transmission compensatrice (8) est prévue entre les deux roues (6, 7).

5. Procédé selon l'une des revendications précédentes, **caractérisé par le fait que** les deux roues (6, 7) sont montées distinctement l'une de l'autre, et sans couplage mutuel.

6. Procédé selon l'une des revendications précédentes, **caractérisé par** la présence d'un bras oscillant, d'une biellette ou d'un élément similaire sur lequel la roue (5), ou les roues (6, 7), est (sont) respectivement montée(s).

7. Procédé selon la revendication 6, **caractérisé par le fait que** le bras oscillant, ou la biellette, est respectivement couplé(e) à la carrosserie par l'intermédiaire d'un ou de plusieurs ressort(s) (9), et d'un ou de plusieurs amortisseur(s) (10).

8. Procédé selon l'une des revendications précédentes, **caractérisé par le fait que** les pièces de remaniement adaptatif sont fabriquées spécifiquement en fonction du type de véhicule et forment, en association, un ensemble de remaniement adaptatif.
